# EUROPÄISCHE PATENTSCHRIFT

(11) **EP 2 262 865 B1**
(45) Veröffentlichungstag und Bekanntmachung des Hinweises auf die Patenterteilung: **18.06.2014**
(21) Anmeldenummer: 09725789.3
(22) Anmeldetag: 25.03.2009
(51) Int. Cl.: C08G 18/80, C09D 5/44, C08G 18/10

(54) **ELEKTROTAUCHLACKE ENTHALTEND POLYMETHYLENHARNSTOFF**
CATHODIC ELECTRODEPOSITION COATINGS CONTAINING POLYMETHYLENE UREA
PEINTURE À BASE D'URÉE DE POLYMÉTHYLÈNE POUR APPLICATION PAR ÉLECTROPHORÈSE

(30) Priorität: 27.03.2008 DE 102008016220
(43) Veröffentlichungstag der Anmeldung: 22.12.2010
(73) Patentinhaber: BASF Coatings GmbH, 48165 Münster (DE)
(72) Erfinder: SCHULTE, Rolf, 48329 Havixbeck (DE); BAUMGART, Hubert, 48163 Münster (DE); AVERHAGE, Peter, 48317 Drensteinfurt (DE); JOHANNPOETTER, Oliver, 48268 Greven (DE)
(74) Vertreter: Leifert & Steffan
(86) Internationale Anmeldenummer: PCT/EP2009/002185
(87) Internationale Veröffentlichungsnummer: WO 2009/118172

(56) Entgegenhaltungen:
- WO-A1-01/51570
- DE-A1-102005 057 853
- DE-A1-102007 038 824
- US-A- 5 670 441

## Beschreibung

Die Erfindung betrifft einen kathodisch abscheidbaren Elektrotauchlack, enthaltend mindestens ein Bindemittel, mindestens ein Vernetzungsmittel sowie mindestens eine Bismutverbindung, ein Verfahren zur Herstellung dieses Elektrotauchlacks und seine Verwendung.

Aus der Patentliteratur sind zahlreiche Beispiele für die Herstellung von Elektrotauchlacken bekannt. Insbesondere Zinn- und/oder Bismutverbindungen werden hierbei als Vernetzungskatalysatoren eingesetzt. Hierbei werden in der letzten Zeit die Bismutverbindungen bevorzugt als Vernetzungskatalysatoren eingesetzt, da sie neben ihrer hohen Aktivität auch eine im Vergleich zu den Zinnverbindungen geringe Toxizität besitzen. Der Einsatz von Bismutverbindungen als Katalysator bei der Bildung von Urethanstrukturen aus Isocyanat- und Hydroxylgruppen ist schon seit langem bekannt (J.H. Saunders and K.C. Frisch, Polyurethanes, Chemistry and Technology aus High Polymers, Vol. XVI, Part 1, Interscience Publishers, a division of John Wiley and Sons, New York, 4th Printing, July 1967, Seite 167). Allerdings ist der Einsatz von Bismutverbindungen als Katalysator bei der Herstellung von Elektrotauchlacken bisher sehr eingeschränkt. In EP 0 642 558 werden die für den Einsatz von Elektrotauchlacken möglichen Bismutverbindungen deutlich eingeschränkt, da die leicht verfügbaren Salze längerkettiger Säuren beim Einsatz in kationischen Bindemitteln Störungen durch ölartige Ausscheidungen verursachen. WO 01/51570 offenbart ähnliche Bismutverbindungen. Des weiteren sollen anorganische Bismutverbindungen durch Einmischen in das Bindemittel oder in eine Pigmentpaste nur schlecht verteilbar und in dieser Form nur wenig katalytisch sein. In der deutschen Patentanmeldung DE 102 36 350 A1 werden Bismutsubsalicylat enthaltende Elektrotauchlacke beschrieben, die einen guten Verlauf haben, frei von Oberflächenstörungen sind und einen guten Korrosionsschutz gewährleisten. Allerdings erfordern diese bekannten Elektrotauchlacke eine relativ hohe Einbrenntemperatur, um eine ausreichende Vernetzung zu erzielen. In der noch unveröffentlichten Patentanmeldung DE 10 2007 038 824 A1 werden Elektrotauchlacke beschrieben, die basisches Bismutnitrat enthalten. Dadurch können die Vernetzungsreaktionen bei niedrigeren Einbrenntemperaturen stattfinden.

In der europäischen Anmeldung EP 0 433 783 A1 werden wässrige Elektrotauchlackierungen beschrieben, die dispergierte Polymerteilchen enthalten. Diese Polymerteilchen sind unter anderem Harnstoff-Aldehyd-Harze, die vernetzte, unschmelzbare Massen bilden. In der WO 98/33835 werden kathodisch abscheidbare Elektrotauchlacke offenbart, die Aminoplastvernetzungsmittel wie alkylierte Harnstoff-Formaldehyd-Harze enthalten. Die in der WO 87/02717 beanspruchten Elektrotauchlacke können ebenfalls Vernetzungsmittel wie alkylierte Harnstoff-Formaldehyd-Harze umfassen.

Die Filme der im Stand der Technik bekannten Elektrotauchlacke weisen jedoch keine gleichmäßigen, homogenen Oberflächen auf und besitzen keine elastischen Eigenschaften bei niedrigen Einbrenntemperaturen.

Aufgabe der vorliegenden Erfindung ist es, einen neuen Elektrotauchlack bereitzustellen, bei dem die Vernetzungsreaktionen bei möglichst niedrigen Einbrenntemperaturen stattfinden sollen. Gleichzeitig soll der Film des Elektrotauchlacks eine gleichmäßige und homogene Oberfläche, auch in kritischen Kantenbereichen, aufweisen. Weiterhin soll der Film elastische Eigenschaften besitzen.

Überraschender Weise wurde gefunden, dass die Aufgabe durch die Kombination von Polymethylenharnstoff mit basischem Bismutnitrat als Vernetzungskatalysator gelöst werden konnte. Das Einbrennen der auf einem Substrat abgeschiedenen Filme ist bei niedrigeren Temperaturen möglich. Der Film weist eine gleichmäßige und homogene Oberfläche, auch in kritischen Kantenbereichen, auf und besitzt elastische Eigenschaften.

Gegenstand der Erfindung ist daher ein Elektrotauchlack der eingangs genannten Art, der dadurch gekennzeichnet ist, dass als Bismutverbindung ein basisches Bismutnitrat und als weitere Komponente Polymethylenharnstoff enthalten sind.

Demnach umfasst die Erfindung einen kathodisch abscheidbaren Elektrotauchlack, enthaltend mindestens ein Bindemittel, mindestens ein Vernetzungsmittel sowie mindestens eine Bismutverbindung, dadurch gekennzeichnet, dass als Bismutverbindung ein basisches Bismutnitrat und als weitere Komponente Polymethylenharnstoff enthalten sind.

Im Hinblick auf den Stand der Technik war es überraschend und für den Fachmann nicht vorhersehbar, dass die der Erfindung zugrunde liegende Aufgabe mit Hilfe der Kombination von basischem Bismutnitrat und Polymethylenharnstoff gelöst werden konnte. Insbesondere war es überraschend, dass die erfindungsgemäßen Elektrotauchlacke sich einfach herstellen ließen, lagerstabil waren, eine optimale Teilchengröße der dispergierten Bestandteile aufwiesen und sehr gut filtrierbar waren. Sie ließen sich in einfacher Weise problemlos elektrophoretisch auf elektrisch leitfähigen Substraten abscheiden. Die resultierenden Elektrotauchlackierungen hatten einen guten Verlauf, waren frei von Oberflächenstörungen und Stippen und boten einen hervorragenden Korrosions- und Kantenschutz.

Polymethylenharnstoff (PMH) und seine Herstellung sind seit langem bekannt. Beispielsweise kann durch säurekatalysierte Gelierung einer Harnstoff-FormaldehydLösung bzw. eines wasserverdünnbaren Harnstoff-Formaldehyd-Konzentrats PMH erhalten werden (bspw. beschrieben in Renner, Makromolekulare Chemie, 1971, 1, 149). Des weiteren ist zum Beispiel in der deutschen Offenlegungsschrift DE 19 07 914 die Herstellung von feinteiligen Aminoharzfeststoffen auf der Basis von Harnstoff-Formaldehydkondensaten durch säurekatalysierte Polykondensation in wässrigem Medium beschrieben.

PHM findet beispielsweise als rieselfähiger Stoff in absorbierenden Artikeln Anwendung (WO 98/43684). In dem dort beschriebenen Verfahren zur Herstellung entsteht in einer ersten Umsetzung von Harnstoff und Formaldehyd, in Abhängigkeit von dem stöchiometrischen Verhältnis, entweder Monomethylolharnstoff oder Dimethylolharnstoff. Die Reaktionsprodukte setzen sich bei geeigneten Reaktionsbedingungen (beispielsweise basischer pH-Wert, Temperatur zwischen 50 °C und 100 °C) unter Wasserabspaltung zu einem Vorkondensat um. Das Vorkondensat wird anschließend mittels Säurekatalyse zu PMH vernetzt. PMH kann dabei auch einen Anteil an PMH aufweisen, der Ethergruppen trägt.

Der erfindungsgemäße Elektrotauchlack enthält mindestens einen Polymethylenharnstoff. PMH kann beispielsweise als Methylendiaminomethyletherpolykondensat aufgefasst werden. Verbindungen dieser Art werden beispielsweise von der DEUTERON GmbH, Deutschland, unter dem Namen Deuteron® als Mattierungsmittel für wässrige und lösemittelhaltige Lacksysteme vertrieben. PMH kann Methylol-, Methylolether- und/oder Ethergruppen enthalten. Vorzugsweise enthält PMH keine Ethergruppen. Bevorzugt enthält Polymethylenharnstoff 0,2 bis 3,0 Massen-% Methylol- und/oder Methylolethergruppen, bezogen auf die Gesamtmasse des Polymethylenharnstoffs. Besonders bevorzugt sind 0,5 bis 2,0 Massen-%.

Die erfindungsgemäßen Elektrotauchlacke enthalten vorzugsweise 0,01 bis 2,0 Massen-% Polymethylenharnstoff, bezogen auf die Gesamtmasse des Elektrotauchlacks. Bevorzugt sind 0,05 bis 1,0 Massen-%, besonders bevorzugt 0,05 bis 0,2 Massen-%.

Die erfindungsgemäßen Elektrotauchlacke weisen vorzugsweise einen Festkörpergehalt von 5 bis 50, bevorzugt 5 bis 35 Massen-% auf. Hierbei ist unter Festkörper der Anteil eines Elektrotauchlacks zu verstehen, der die hieraus hergestellte Elektrotauchlackierung aufbaut. Die erfindungsgemäßen Elektrotauchlacke enthalten mindestens ein Bindemittel.

Die Bindemittel enthalten reaktive funktionelle Gruppen, die mit in Vernetzungsmitteln vorhandenen komplementären reaktiven funktionellen Gruppen thermische Vernetzungsreaktionen eingehen können.

Beispiele geeigneter reaktiver funktioneller Gruppen sind Hydroxylgruppen, Thiolgruppen und primäre und sekundäre Aminogruppen, insbesondere Hydroxylgruppen.

Das Bindemittel kann kationische und/oder potentiell kationische Gruppen enthalten. Bindemittel dieser Art werden in kathodisch abscheidbaren Elektrotauchlacken eingesetzt.

Beispiele geeigneter potentiell kationischer Gruppen, die durch Neutralisationsmittel und/oder Quaternisierungsmittel in Kationen überführt werden können, sind primäre, sekundäre oder tertiäre Aminogruppen, sekundäre Sulfidgruppen oder tertiäre Phoshingruppen, insbesondere tertiäre Aminogruppen oder sekundäre Sulfidgruppen.

Beispiele geeigneter kationischer Gruppen sind primäre, sekundäre, tertiäre oder quarternäre Ammoniumgruppen, tertiäre Sulfoniumgruppen oder quarternäre Phosphoniumgruppen, vorzugsweise quarternäre Ammoniumgruppen oder tertiäre Sulfoniumgruppen, insbesondere aber quarternäre Ammoniumgruppen.

Beispiele geeigneter Neutralisationsmittel für die potentiell kationischen Gruppen sind anorganische und organische Säuren wie Schwefelsäure, Salzsäure, Phosphorsäure, Ameisensäure, Essigsäure, Milchsäure, Dimethylolpropionsäure, Zitronensäure oder Sulfonsäuren, wie Amidosulfonsäuren und Alkansulfonsäuren, wie zum Beispiel Methansulfonsäure, insbesondere Ameisensäure, Essigsäure oder Milchsäure.

Beispiele geeigneter Bindemittel für Elektrotauchlacke sind aus den Druckschriften EP 0 082 291 A 1, EP 0 234 395 A 1, EP 0 227 975 A 1, EP 0 178 531 A 1, EP 0 333 327, EP 0 310 971 A 1, EP 0 456 270 A 1, US 3,922,253 A, EP 0 261 385 A 1, EP 0 245 786 A1, EP 0 414 199 A1, EP 0 476 514 A1. EP 0 817 684 A1. EP 0 639 660A 1, EP 0 595 186 A 1, DE 41 26 476 A 1, WO 98/33835, DE 33 00 570 A 1, DE 37 38 220 A 1, DE 35 18 732 A 1 oder DE 196 18 379 A 1 bekannt. Hierbei handelt es sich vorzugsweise um primäre, sekundäre, tertiäre oder quarternäre Amino- oder Ammoniumgruppen und/oder tertiäre Sulfoniumgruppen enthaltende Harze mit Aminzahlen vorzugsweise zwischen 20 und 250 mg KOH/g und einem gewichtsmittleren Molekulargewicht von 300 bis 10000 Dalton. Insbesondere werden Amino(meth)acrylatharze, Amonoepoxidharze, Aminoepoxidharze mit endständigen Doppelbindungen, Aminoepoxidharze mit primären und/oder sekundären Hydroxylgruppen, Aminopolyurethanharze, aminogruppenhaltige Polybutadienharze oder modifizierte Epoxidharz-Kohlendioxid-Amin-Umsetzungsprodukte verwendet. Als Vernetzungsmittel kommen alle üblichen und bekannten Vernetzungsmittel in Betracht, die geeignete komplementäre reaktive funktionelle Gruppen enthalten. Vorzugsweise werden die Vernetzungsmittel aus der Gruppe bestehend aus blockierten Polyisocyanaten, Melamin-Formaldehyd-Harzen, Tris(alkoxycarbonylamino)triazinen und Polyepoxiden ausgewählt. Bevorzugt werden die Vernetzungsmittel aus der Gruppe, bestehend aus blockierten Polyisocyanaten und hoch reaktiven Melamin-Formaldehyd-Harzen, ausgewählt. Besonders bevorzugt werden die blockierten Polyisocyanate eingesetzt.

Die blockierten Polyisocyanate werden aus üblichen und bekannten Lackpolyisocyanaten mit aliphatisch, cycloaliphatisch, araliphatisch und/oder aromatisch gebundenen Isocyanatgruppen hergestellt.

Beispiele für geeignete Lackpolyisocyanate sind beispielsweise in "Methoden der organischen Chemie", Houben-Weyl, Band 14/2, 4. Auflage, Georg Thieme Verlag, Stuttgart 1963, Seite 61 bis 70, und von W. Siefken, Liebigs Annalen der Chemie, Band 562, Seiten 75 bis 136, beschrieben.

Weitere Beispiele geeigneter Lackpolyisocyanate sind Isocyanurat-, Biuret-, Allophanat-, Iminooxadiazindion-, Urethan-, Harnstoff-, Carbodiimid- und/oder Uretdiongruppen aufweisende Polyisocyanate, die aus üblichen und bekannten Diisocyanaten erhältlich sind. Vorzugsweise werden als Diisocyanate Hexamethylendiisocyanat, Isophorondiisocyanat, 2-Isocyanatopropylcyclohexylisocyanat, Dicyclohexylmethan-2,4'-diisocyanat, Dicyclohexylmethan-4,4'-diisocyanat oder 1,3-Bis(isocyanatomethyl)cyclohexan (BIC), Diisocyanate, abgeleitet von Dimerfettsäuren, 1,8-Diisocyanato-4-isocyanatomethyl-octan, 1,7-Diisocyanato-4-isocyanatomethyl-heptan, 1-Isocyanato-2-(3-isocyanatopropyl)cyclohexan, 2,4- und/oder 2,6-Toluylendiisocyanat, 4,4'-Diphenylmethandiisocyanat, Naphthalindiisocyanat oder Mischungen aus diesen Polyisocyanaten eingesetzt.

Beispiele für geeignete Blockierungsmittel zur Herstellung der blockierten Polyisocyanate sind
i) Phenole, wie Phenol, Cresol, Xylenol, Nitrophenol, Chlorophenol, Ethylphenol, t-Butylphenol, Hydroxybenzoesäure, Ester dieser Säure oder 2,5-Di-tert.-butyl-4-hydroxytoluol;
ii) Lactame, wie ε-Caprolactam, δ-Valerolactam, γ-Butyrolactam oder β-Propiolactam;
iii) aktive methylenische Verbindungen, wie Diethylmalonat, Dimethylmalonat, Acetessigsäureethyl- oder -methylester oder Acetylaceton;
iv) Alkohole wie Methanol, Ethanol, n-Propanol, Isopropanol, n-Butanol, Isobutanol, t-Butanol, n-Amylalkohol, t-Amylalkohol, Laurylalkohol, Ethylenglykolmonomethylether, Ethylenglykolmonoethylether, Ethylenglykolmonobutylether, Diethylenglykolmonomethylether, Diethylenglykolmonoethylether, Propylenglykolmonomethylether, Methoxymethanol, Glykolsäure, Glykolsäureester, Milchsäure, Milchsäureester, Methylolharnstoff, Methylolmelamin, Diacetonalkohol, Ethylenchlorohydrin, Ethylenbromhydrin, 1,3-Dichloro-2-propanol, 1,4-Cyclohexyldimethanol oder Acetocyanhydrin;
v) Mercaptane wie Butylmercaptan, Hexylmercaptan, t-Butylmercaptan, t-Dodecylmercaptan, 2-Mercaptobenzothiazol, Thiophenol, Methylthiophenol oder Ethylthiophenol;
vi) Säureamide wie Acetoanilid, Acetoanisidinamid, Acrylamid, Methacrylamid, Essigsäureamid, Stearinsäureamid oder Benzamid;
vii) Imide wie Succinimid, Phthalimid oder Maleinimid;
viii) Amine wie Diphenylamin, Phenylnaphthylamin, Xylidin, N-Phenylxylidin, Carbazol, Anilin, Naphthylamin, Butylamin, Dibutylamin oder Butylphenylamin;
ix) Imidazole wie Imidazol oder 2-Ethylimidazol;
x) Harnstoffe wie Harnstoff, Thioharnstoff, Ethylenharnstoff, Ethylenthioharnstoff oder 1,3-Diphenylharnstoff;
xi) Carbamate wie N-Phenylcarbamidsäurephenylester oder 2-Oxazolidon;
xii) Imine wie Ethylenimin;
xiii) Oxime wie Acetonoxim, Formaldoxim, Acetaldoxim, Acetoxim, Methylethylketoxim, Diisobutylketoxim, Diacetylmonoxim, Benzophenonoxim oder Chlorohexanonoxime;
xiv) Salze der schwefeligen Säure wie Natriumbisulfit oder Kaliumbisulfit;
xv) Hydroxamsäureester wie Benzylmethacrylohydroxamat (BMH) oder Allylmethacrylohydroxamat; oder
xvi) substituierte Pyrazole, Imidazole oder Triazole; sowie
xvii) 1,2-Polyole wie Ethylenglykol, Propylenglykol, 1,2-Butandiol;
xviii) 2-Hydroxyester wie 2-Hydroxyethylacrylat, 2-Hydroxyethylmethacrylat;
xix) Gemische dieser Blockierungsmittel.

Die erfindungsgemäßen Elektrotauchlacke enthalten Bismutsubnitrat der Summenformel 4(BiNO₃(OH)₂)·BiO(OH). Es hat einen Bismutgehalt nach Deutschem Arzneibuch (DAB) 7 von 71 bis 74 Massen-%. Das Bismutsubnitrat ist eine handelsübliche Verbindung und wird beispielsweise von der Firma MCP HEK GmbH, Lübeck, vertrieben. Vorzugsweise enthalten die erfindungsgemäßen Elektrotauchlacke, bezogen auf ihren Festkörper, 0,05 bis 5, bevorzugt 0,1 bis 4 und insbesondere 0,2 bis 3 Massen-% Bismutsubnitrat.

Darüber hinaus können die erfindungsgemäßen Elektrotauchlacke noch mindestens einen üblichen und bekannten Zusatzstoff, ausgewählt aus der Gruppe, bestehend aus von Bismutsubnitrat verschiedenen Katalysatoren, Pigmenten, Antikrateradditiven, Polyvinylalkoholen, thermisch härtbaren Reaktivverdünnern, molekulardispers löslichen Farbstoffen, Lichtschutzmitteln, wie UV-Absorbern und reversiblen Radikalfängern (HALS), Antioxidantien, niedrig- und hochsiedenden ("lange") organischen Lösemitteln, Entlüftungsmitteln, Netzmitteln, Emulgatoren, Slipadditiven, Polymerisationsinhibitoren, thermolabilen radikalischen Initiatoren, Haftvermittlern, Verlaufmitteln, filmbildenden Hilfsmitteln, Netz- und Dispergiermitteln, Füllstoffen, Flammschutzmitteln, Korrosionsinhibitoren, Rieselhilfen, Wachsen, Sikkativen, Bioziden und Mattierungsmitteln, in wirksamen Mengen enthalten.

Weitere Beispiele geeigneter Zusatzstoffe werden in dem Lehrbuch »Lackadditive« von Johan Bieleman, Wiley-VCH, Weinheim, New York, 1998, in D. Stoye und W. Freitag (Editors), »Paints, Coatings and Solvents«, Second, Completely Revised Edition, Wiley-VCH, Weinheim, New York, 1998, »14.9. Solvent Groups«, Seiten 327 bis 373, beschrieben.

Vorzugsweise werden Pigmente als Zusatzstoffe eingesetzt. Bevorzugt werden die Pigmente aus der Gruppe, bestehend aus üblichen und bekannten farbgebenden, effektgebenden, elektrisch leitfähigen, magnetisch abschirmenden, fluoreszierenden, füllenden und korrosionshemmenden organischen und anorganischen Pigmenten, ausgewählt.

Die erfindungsgemäßen Elektrotauchlacke werden durch Vermischen von Bindemittel, Vernetzungsmittel, der basischen Bismutnitratverbindung, ggf. weiterer bevorzugter Bestandteile und Polymethylenharnstoff hergestellt. Die Bestandteile können homogenisiert werden. Gegebenenfalls können die erfindungsgemäßen Elektrotauchlacke mit Hilfe üblicher und bekannter Mischverfahren und Vorrichtungen wie Rührkessel, Rührwerksmühlen, Extruder, Kneter, Ultraturrax, Inline-Dissolver, statische Mischer, Mikromischer, Zahnkranzdispergatoren, Druckentspannungsdüsen und/oder Microfluidizern hergestellt werden. Dabei wird PMH vorzugsweise in der Form von Pigmentpasten oder Pigmentpräparationen in die Elektrotauchlacke eingearbeitet (vgl. Römpp Lexikon Lacke und Druckfarben, Georg Thieme Verlag, Stuttgart, New York, 1998, »Pigmentpräparationen«, Seite 452).

Die erfindungsgemäßen Elektrotauchlacke können beispielsweise zur kathodischen Tauchlackierung verwendet werden. Aus den erfindungsgemäßen Elektrotauchlacken können üblicherweise auf elektrisch leitfähigen, beispielsweise elektrisch leitfähigen oder leitfähig gemachten, beispielsweise durch Metallisierung elektrisch leitfähig gemachten Kunststoffsubstraten oder insbesondere metallischen Substraten kathodisch abgeschieden werden. Die Erfindung betrifft daher auch das Verfahren zur kathodischen Abscheidung der erfindungsgemäßen Elektrotauchlacken auf derartigen Substraten. Weiterhin lassen sich die erfindungsgemäßen Elektrotauchlacke zur Herstellung von Grundierungsschichten durch kathodische Tauchlackierung von Substraten mit elektrisch leitfähigen Oberflächen verwenden. Als metallische Substrate können Teile aus sämtlichen üblichen Metallen, beispielsweise die in der Automobilindustrie üblichen Metallteile, insbesondere Automobilkarossen und deren Teile, eingesetzt werden. Demnach können die erfindungsgemäßen Elektrotauchlacke auch bei der Lackierung von Kraftfahrzeugen oder deren Teilen verwendet werden.

Im Folgenden wird die Erfindung anhand von Beispielen näher erläutert.

### Beispiele

### Herstellbeisniel 1 (Vernetzer)

Verwendet wird der Vernetzer aus EP 0961797 B1 (S. 6 Z. 43 - 52). In einem Reaktor, der mit einem Rührer, Rückflußkühler, Innenthermometer und Inertgaseinleitung ausgestattet ist, werden 1084 g Isomere und höherfunktionelle Oligomere auf Basis von 4,4'-Diphenylmethandiisocyanat mit einem NCO-Equivalentgewicht von 135 (BasonatR A270, Fa. BASF; NCO-Funktionalität ca. 2,7; Gehalt an 2,2'- und 2,4'-Diphenylmethandiisocyanat unter 5%) unter Stickstoffatmosphäre vorgelegt. Man gibt 2 g Dibutylzinnlaurat zu und tropft 1314 g Butyldiglycol mit einer solchen Geschwindigkeit zu, dass die Produkttemperatur unter 70°C bleibt. Gegebenenfalls muss gekühlt werden. Nach Ende der Zugabe wird die Temperatur weitere 120 min bei 70°C gehalten. Bei der nachfolgenden Kontrolle sind keine NCO-Gruppen mehr nachweisbar. Man kühlt auf 65°C ab.

Der Feststoffgehalt liegt bei > 97 % (1 h bei 130°C).

### Herstellbeispiel 2 (Bindemittel-Dispersion)

Verwendet wird die Bindemitteldispersion A aus EP 0961797 B1 (S. 7, Z. 4 - 30). In einem wärmeträgerölbeheizten Laborreaktor, ausgestattet mit Rührer, Rückflusskühler, Thermometer und Inertgaseinleitungsrohr, werden 1128 Teile eines handelsüblichen Epoxidharzes auf Basis Bisphenol A mit einem Epoxidäquivalentgewicht (EEW) von 188; 262 Teile Dodecylphenol, 31,4 Teile Xylol und 228 Teile Bisphenol A vorgelegt und unter Stickstoff auf 127°C aufgeheizt. Unter Rühren werden 1,6 g Triphenylphosphin zugegeben, worauf eine exotherme Reaktion eintritt und die Temperatur auf 160°C steigt. Man lässt wieder auf 130°C abkühlen und kontrollliert anschliessend den Epoxidgehalt. Das EEW von 532 zeigt an, dass > 98% der phenolischen OH-Gruppen reagiert haben. Sodann werden 297,5 Teile Pluriol P 900 (Polypropylenglykol MW 900, BASF) unter gleichzeitiger Kühlung zugegeben. 5 Minuten später gibt man bei 120°C unter weiterer Kühlung 105 Teile Diethanolamin zu. Wenn nach kurzzeitiger Exothermie (Tₘₐₓ 127°C) die Temperatur auf 110°C gesunken ist (30 Min.), gibt man 51 Teile N,N-Dimethylaminopropylamin zu. Nach kurzzeitiger Exothermie (Tₘₐₓ 140°C) lässt man den Ansatz für 2 Stunden bei 130°C weiterreagieren, bis die Viskosität konstant bleibt (1,8 dPas, Platte-Kegel-Viskosimeter bei 23°C, 40%-ig in Solvenon PM (BASF)). Sodann gibt man unter gleichzeitiger Kühlung 58,5 Teile Butylglykol und 887,8 Teile des Vernetzers (Herstellbeispiel 1) zu und trägt bei 105°C aus. 2100 Teile der noch heissen Mischung werden unverzüglich in einer vorgelegten Mischung aus 1945 Teilen vollentsalztem Wasser (VE-Wasser) und 33,1 Teilen Eisessig unter intensivem Rühren dispergiert. Nach kurzem Homogenisieren wird mit weiteren 1404 Teilen VE-Wasser verdünnt und über Plattenfilter K900 (Fa. Seitz) filtriert. Die Dispersion hat folgende Kennzahlen:
Festkörper (1 h bei 130°C): 35,7%
MEQ-Base = 0,657 meq/g Festharz
MEQ-Säure = 0,283 meq/g Festharz
pH = 5,4
Mittlere Teilchengröße = 1250' (Lichtstreumethode)
Absetzstabilität = nach 3 Monaten Lagerzeit bei Raumtemperatur kein Bodensatz Viskosität = 14 sec. (DIN4 Becher bei 23°C)

### Herstellbeispiel 3 (Reibharz)

Verwendet wird das Reibharz A aus EP 0961797 (S. 9, Z. 17 - 21). In einem mit Rührwerk, Innenthermometer, Stickstoffeinlass und Wasserabscheider mit Rückflusskühler ausgestatteten Reaktor werden 30,29 Teile eines Epoxidharzes auf Basis Bisphenol A mit einem Epoxidequivalentgewicht (EEW) von 188; 9,18 Teile Bisphenol A, 7,04 Teile Dodecylphenol und 2,37 Teile Butylglykol vorgelegt. man heizt auf 110°C auf, fügt 1,85 Teile Xylol zu und destilliert dieses unter schwachem Vakuum zusammen mit möglichen Wasserspuren wieder ab. Sodann gibt man 0,07 Teile Triphenylphosphin zu und heizt auf 130°C auf. Nach exothermer Wärmetönung auf 150°C lässt man bei 130°C noch 1 h nachreagieren. Das EEW der Reaktionsmischung liegt dann bei 860. Man kühlt und gibt währenddessen 9,91 Teile Butylglykol und 17,88 Teile eines Polypropylenglykoldiglycidylethers mit EEW 333 (DER 732, Dow Chemicals) zu. Bei 90°C werden 4,23 Teile 2-2'-Aminoethoxyethanol (H₂N-CH₂-CH₂-O-CH₂-CH₂-OH) und 10 min. später 1,37 Teile N,N-Dimethylaminopropylamin zugefügt. Die Reaktionsmischung wird nach kurzzeitiger Exothermie noch für 2 h bei 90°C gehalten, bis die Viskosität konstant bleibt, und anschliessend wird mit 17,66 Teilen Butylglykol verdünnt. Das Harz hat einen Festkörper von 69,8% (gemessen 1 h bei 130°C) und eine Viskosität von 5,5 dPas (gemessen an einer 40%-igen mit Propylenglykolmonomethylether (Solvenon PM, BASF) verdünnten Harzlösung am Platte-Kegel-Viskosimeter bei 23°C). Das Harz wird der besseren Handhabung wegen zusätzlich mit 2,82 Teilen Eisessig und 13,84 Teilen VE-Wasser neutralisiert und verdünnt. Der ursprüngliche Festgehalt wird dadurch auf 60% abgesenkt.

### Herstellbeispiel 4 (wäßrige Pigmentpasten)

Analog zu dem in EP 0505445 B1 (S. 10, Z. 35 - 42) beschriebenen Verfahren werden aus den in der nachfolgenden Tabelle 1 aufgeführten Ausgangsstoffen wäßrige Pigmentpasten hergestellt. Dazu werden zunächst entionisiertes Wasser und das Reibharz aus Herstellbeispiel 3 vorgemischt. Dann fügt man die übrigen Bestandteile gemäß den Mengenangaben in Tabelle 1 hinzu und mischt 30 min. lang unter einem schnellaufenden Dissolverrührwerk. Anschliessend wird die Mischung in einer Laborkleinmühle während 1 bis 1,5 h bis zu einer Hegmann-Feinheit von kleiner 12 dispergiert. Die Mengenangaben verstehen sich als Gewichtsanteile.

**Tabelle 1: Zusammensetzung der wäßrigen Pigmentpasten**

| | Variante A | Variante B | Variante C | Variante D |
|---|---|---|---|---|
| Reibharz A (Herstellbeispiel 3) | 40 | 40 | 40 | 40 |
| vollentsalztes Wasser | 8 | 8,5 | 9,4 | 9,8 |
| Wismutsubsalicylat | 6 | | | |
| Wismutsubnitrat | | 6 | 6 | 6 |
| Russ | 0,5 | 0,5 | 0,5 | 0,5 |
| Aluminiumsilikat | 8 | 8 | 8 | 8 |
| Titandioxid* | 37,5 | 35,2 | 33,1 | 31,7 |
| Deuteron MK-F6** | | 1,8 | 3 | 4 |

| | | | | |
|---|---|---|---|---|
| * TI-PURE R900, DuPont ** Polyharnstoff, Fa. Deuteron | | | | |

### Beispiele B,C,D und Vergleichsbeispiel A

### (erfindungsgemäße und herkömmliche kathodische Elektrotauchlacke)

Zur Herstellung eines herkömmlichen und der erfindungsgemäßen kathodischen Elektrotauchlacke werden die Bindemitteldispersion aus Herstellbeispiel 2 und jeweils eine der in Tabelle 1 aufgeführten wäßrigen Pigmentpasten (Herstellbeispiel 4) mit vollentsalztem Wasser in den in Tabelle 2 angegebenen Mengen (Gewichtsanteile) kombiniert. Man verfährt dabei so, dass die Bindemitteldispersion vorgelegt und mit vollentsalztem Wasser verdünnt wird. Anschließend wird unter Rühren die Pigmentpaste eingetragen. Es resultieren die erfindungsgemäßen Elektrotauchlacke (Varianten B - D) sowie ein herkömmlicher Elektrotauchlack A.

**Tabelle 2: Erfindungsgemäße und herkömmliche Elektrotauchlacke**

| **Ansatzrezeptur** | Variante A | Variante B | Variante C | Variante D |
|---|---|---|---|---|
| Bindemitteldispersion (Herstellbeispiel 2) | 425,4 | 451,8 | 479,0 | 492,4 |
| Pigmentpaste (Herstellbeispiel 4) | 69,8 | 56,1 | 42,3 | 35,1 |
| VE-Wasser | 504,8 | 492,0 | 478,7 | 472,6 |

### Prüfung auf mechanische Eigenschaften

Man läßt die Elektrotauchlacke 3 Tage bei Raumtemperatur unter Rühren altern, bevor sie zur kathodischen Elektrotauchlackierung verwendet werden. Die Abscheidung der Lackfilme erfolgt während 2 Minuten bei 220 Volt Abscheide- und 350 Volt Abrißspannung (Badtemperatur 29°C) auf kathodisch geschalteten zinkphosphatierten Stahlprüftafeln ohne Cr(IV)-Nachspülung in der Vorbehandlung. Die abgeschiedenen Filme werden mit entionisiertem Wasser nachgespült und während 15 Minuten bei 175°C (Objekttemperatur) eingebrannt (Schichtdicke 20 µm).

**Tabelle 3: Mechanische Eigenschaften**

| **Mechanische Eigenschaften** | | Variante A | Variante B | Variante C | Variante D |
|---|---|---|---|---|---|
| Biegung am konischen Dorn nach ISO (cm) | 0=gut | 2 | 0 | 0 | 0 |
| Schlagfestigkeit: Reverse Impact Test (inch x pound) | 160=gut | 90 | 160 | 180 | 180 |
| Erichsentiefung nach ISO (mm) | 8=gut | 5 | 7 | 8 | 8 |

Die mechanischen Eigenschaften der aus den erfindungsgemäßen Elektrotauchlacken resultierenden Beschichtungen sind im Vergleich zu einer aus einem herkömmlichen Elektrotauchlack resultierenden Beschichtung in Tabelle 3 zusammengefaßt. Die erfindungsgemäßen Elektrotauchlacke liefern demgemäß Beschichtungen mit hervorragenden mechanischen Eigenschaften gegenüber einem herkömmlichen Elektrotauchlack.

## Patentansprüche

1. Kathodisch abscheidbarer Elektrotauchlack, enthaltend mindestens ein Bindemittel, mindestens ein Vernetzungsmittel sowie mindestens eine Bismutverbindung, **dadurch gekennzeichnet, dass** als Bismutverbindung ein basisches Bismutnitrat und als weitere Komponente Polymethylenharnstoff enthalten sind.

2. Elektrotauchlack nach Anspruch 1, **dadurch gekennzeichnet, dass** der Polymethylenharnstoff Methylol-, Methylolether und/oder Ethergruppen aufweist.

3. Elektrotauchlack nach Anspruch 1, **dadurch gekennzeichnet, dass** der Polymethylenharnstoff 0,2 bis 3,0 Massen-% Methylol- und/oder Methylolethergruppen, bezogen auf die Gesamtmasse des Polymethylenharnstoffs, aufweist.

4. Elektrotauchlack nach einem der Ansprüche 1 bis 3, **dadurch gekennzeichnet, dass** der Elektrotauchlack 0,01 bis 2,0 Massen-% Polymethylenharnstoff, bezogen auf die Gesamtmasse des Elektrotauchlacks, enthält.

5. Elektrotauchlack nach einem der Ansprüche 1 bis 3, **dadurch gekennzeichnet, dass** der Elektrotauchlack 0,05 bis 1,0 Massen-% Polymethylenharnstoff, bezogen auf die Gesamtmasse des Elektrotauchlacks, enthält.

6. Elektrotauchlack nach einem der Ansprüche 1 bis 3, **dadurch gekennzeichnet, dass** der Elektrotauchlack 0,05 bis 0,2 Massen-% Polymethylenharnstoff, bezogen auf die Gesamtmasse des Elektrotauchlacks, enthält.

7. Elektrotauchlack nach einem der Ansprüche 1 bis 6, **dadurch gekennzeichnet, dass** das basische Bismutnitrat einen Bismutgehalt von 71 Massen-% bis 74 Massen-% hat.

8. Elektrotauchlack nach einem der Ansprüche 1 bis 7, **dadurch gekennzeichnet, dass** das basische Bismutnitrat ein Bismutsubnitrat der Summenformel 4(BiNO₃(OH)₂) BiO(OH) ist.

9. Elektrotauchlack nach einem der Ansprüche 1 bis 8, **dadurch gekennzeichnet, dass** bezogen auf den Festkörpergehalt, 0,05 Massen-% bis 5 Massen-% basisches Bismutnitrat enthalten ist.

10. Elektrotauchlack nach einem der Ansprüche 1 bis 9, **dadurch gekennzeichnet, dass** das Bindemittel kationische und/oder potentiell kationische Gruppen enthält.

11. Elektrotauchlack nach einem der Ansprüche 1 bis 10, **dadurch gekennzeichnet, dass** das Vernetzungsmittel ausgewählt ist aus der Gruppe bestehend aus blockierten Polyisocyanaten, Melamin-Formaldehyd-Harzen, Tris(alkoxycarbonylamino)triazinen und Polyepoxiden.

12. Elektrotauchlack nach einem der Ansprüche 1 bis 11, **dadurch gekennzeichnet, dass** er mindestens einen Zusatzstoff enthält.

13. Verfahren zur Herstellung des Elektrotauchlacks nach Anspruch 1 bis 12, **dadurch gekennzeichnet, dass** das Bindemittel, das Vernetzungsmittel, die basische Bismutnitratverbindung und alle weiteren Bestandteile mit Polymethylenharnstoff vermischt werden.

14. Verwendung des Elektrotauchlacks nach einem der Ansprüche 1 bis 12 zur kathodischen Tauchlackierung.

15. Verwendung des Elektrotauchlacks nach einem der Ansprüche 1 bis 12 zur Herstellung von Grundierungsschichten durch kathodische Tauchlackierung von Substraten mit elektrisch leitfähigen Oberflächen.

16. Verwendung des Elektrotauchlacks nach einem der Ansprüche 1 bis 12 bei der Lackierung von Kraftfahrzeugen oder deren Teilen.

## Claims

1. Cathodically depositable electrodeposition primer comprising at least one binder, at least one crosslinking agent, and at least one bismuth compound, **characterized in that** a basic bismuth nitrate is present as bismuth compound and polymethyleneurea is present as a further component.

2. Electrodeposition primer according to Claim 1, **characterized in that** the polymethyleneurea contains methylol, methylol ether and/or ether groups.

3. Electrodeposition primer according to Claim 1, **characterized in that** the polymethyleneurea contains 0.2% to 3.0% by mass of methylol and/or methylol ether groups, based on the total mass of the polymethyleneurea.

4. Electrodeposition primer according to any one of Claims 1 to 3, **characterized in that** the electrodeposition primer contains 0.01% to 2.0% by mass of polymethyleneurea, based on the total mass of the electrodeposition primer.

5. Electrodeposition primer according to any one of Claims 1 to 3, **characterized in that** the electrodeposition primer contains 0.05% to 1.0% by mass of polymethyleneurea, based on the total mass of the electrodeposition primer.

6. Electrodeposition primer according to any one of Claims 1 to 3, **characterized in that** the electrodeposition primer contains 0.05% to 0.2% by mass of polymethyleneurea, based on the total mass of the electrodeposition primer.

7. Electrodeposition primer according to any one of Claims 1 to 6, **characterized in that** the basic bismuth nitrate has a bismuth content of 71% by mass to 74% by mass.

8. Electrodeposition primer according to any one of Claims 1 to 7, **characterized in that** the basic bismuth nitrate is a bismuth subnitrate of the empirical formula 4(BiNO₃(OH)₂)BiO(OH).

9. Electrodeposition primer according to any one of Claims 1 to 8, **characterized in that** 0.05% to 5% by mass of basic bismuth nitrate is present, based on the solids content.

10. Electrodeposition primer according to any one of Claims 1 to 9, **characterized in that** the binder contains cationic and/or potentially cationic groups.

11. Electrodeposition primer according to any one of Claims 1 to 10, **characterized in that** the crosslinking agent is selected from the group consisting of blocked polyisocyanates, melamine-formaldehyde resins, tris(alkoxycarbonylamino)triazines, and polyepoxides.

12. Electrodeposition primer according to any one of Claims 1 to 11, **characterized in that** it comprises at least one additive.

13. Process for preparing the electrodeposition primer according to Claim 1 to 12, **characterized in that** the binder, the crosslinking agent, the basic bismuth nitrate compound, and all further constituents are mixed with polymethyleneurea.

14. Use of the electrodeposition primer according to any one of Claims 1 to 12 for cathodic dip coating.

15. Use of the electrodeposition primer according to any one of Claims 1 to 12 for producing primer coats by cathodic dip coating of substrates having electrically conductive surfaces.

16. Use of the electrodeposition primer according to any one of Claims 1 to 12 in the finishing of motor vehicles or parts thereof.

## Revendications

1. Peinture électrophorétique apte à être appliquée par dépôt cathodique, contenant au moins un liant, au moins un agent de réticulation ainsi qu'au moins un composé contenant du bismuth, **caractérisée en ce que** sont contenus en tant que composé contenant du bismuth un nitrate de bismuth basique et en tant qu'autre composant de la polyméthylène-urée.

2. Peinture électrophorétique selon la revendication 1, **caractérisée en ce que** la polyméthylène-urée comporte des groupes méthylol, méthyloléther et/ou éther.

3. Peinture électrophorétique selon la revendication 1, **caractérisée en ce que** la polyméthylène-urée comporte 0,2 à 3,0 % en masse de groupes méthylol et/ou méthyloléther, par rapport à la masse totale de la polyméthylène-urée.

4. Peinture électrophorétique selon l'une quelconque des revendications 1 à 3, **caractérisée en ce que** la peinture électrophorétique contient 0,01 à 2,0 % en masse de polyméthylène-urée, par rapport à la masse totale de la peinture électrophorétique.

5. Peinture électrophorétique selon l'une quelconque des revendications 1 à 3, **caractérisée en ce que** la peinture électrophorétique contient 0,05 à 1,0 % en masse de polyméthylène-urée, par rapport à la masse totale de la peinture électrophorétique.

6. Peinture électrophorétique selon l'une quelconque des revendications 1 à 3, **caractérisée en ce que** la peinture électrophorétique contient 0,05 à 0,2 % en masse de polyméthylène-urée, par rapport à la masse totale de la peinture électrophorétique.

7. Peinture électrophorétique selon l'une quelconque des revendications 1 à 6, **caractérisée en ce que** le nitrate de bismuth basique a une teneur en bismuth de 71 % en masse à 74 % en masse.

8. Peinture électrophorétique selon l'une quelconque des revendications 1 à 7, **caractérisée en ce que** le nitrate de bismuth basique est un sous-nitrate de bismuth de formule brute 4(BiNO₃(OH)₂)BiO(OH).

9. Peinture électrophorétique selon l'une quelconque des revendications 1 à 8, **caractérisée en ce que**, par rapport à la teneur en matière solide, 0,05 % en masse à 5 % en masse de nitrate de bismuth basique sont contenus.

10. Peinture électrophorétique selon l'une quelconque des revendications 1 à 9, **caractérisée en ce que** le liant contient des groupes cationiques et/ou potentiellement cationiques.

11. Peinture électrophorétique selon l'une quelconque des revendications 1 à 10, **caractérisée en ce que** l'agent de réticulation est choisi dans le groupe constitué par des polyisocyanates bloqués, des résines mélamine-formaldéhyde, des tris(alcoxy-carbonylamino)triazines et des polyépoxydes.

12. Peinture électrophorétique selon l'une quelconque des revendications 1 à 11, **caractérisée en ce qu'**elle contient au moins un additif.

13. Procédé pour la préparation de la peinture électrophorétique selon l'une quelconque des revendications 1 à 12, **caractérisé en ce qu'**on mélange le liant, l'agent de réticulation, le composé contenant du nitrate de bismuth basique et tous les autres composants avec la polyméthylène-urée.

14. Utilisation de la peinture électrophorétique selon l'une quelconque des revendications 1 à 12, pour le peinturage par électrophorèse cathodique.

15. Utilisation de la peinture électrophorétique selon l'une quelconque des revendications 1 à 12, pour la production de couches d'apprêt par peinturage par électrophorèse cathodique de subjectiles à surfaces conductrices de l'électricité.

16. Utilisation de la peinture électrophorétique selon l'une quelconque des revendications 1 à 12, dans le peinturage de véhicules automobiles ou de parties de ceux-ci.
